# EUROPÄISCHE PATENTSCHRIFT

(11) **EP 0 357 954 B1**
(45) Veröffentlichungstag und Bekanntmachung des Hinweises auf die Patenterteilung: **17.03.1993**
(21) Anmeldenummer: 89114245.7
(22) Anmeldetag: 02.08.1989
(51) Int. Cl.: C02F 11/18, C02F 3/12

(54) **Verfahren zur Wärmerückgewinnung bei der Schlammbehandlung**
Process for heat recovery during sludge treatment
Procédé de récupération de la chaleur pour le traitement des boues

(30) Priorität: 05.08.1988 DE 3826726
(43) Veröffentlichungstag der Anmeldung: 14.03.1990
(73) Patentinhaber: UTB Umwelttechnik Buchs AG, CH-9470 Buchs/SG (CH)
(72) Erfinder: Stockner, Josef, Dipl.-Ing., D-8021 Baierbrunn (DE)
(74) Vertreter: Riederer, Conrad A., Dr.

(56) Entgegenhaltungen:
- EP-A- 0 179 234
- DE-A- 2 649 178
- DE-A- 3 240 009
- DE-A- 3 520 458
- FR-A- 2 388 234

## Beschreibung

Die Erfindung betrifft ein Verfahren zur Behandlung von Schlamm, bei dem frischer Schlamm in einem Reaktor durch Temperaturerhöhung hygienisiert und/oder hydrolisiert wird und in einem mindestens zwei Kammern aufweisenden Wärmetauscher der frische Schlamm mit dem hygienisierten und/oder hydrolisierten Schlamm vorgewärmt bzw. der hygienisierte und/oder hydrolisierte Schlamm mit dem frischen Schlamm abgekühlt wird.

Es ist bekannt, organische Abfallmassen, insbesondere Klärschlamm, durch Erwärmen auf eine Temperatur von über 60 °C zu hygienisieren und/oder hydrolisieren. Besonders zweckmäßig ist dabei die biologische Erwärmung des Schlamms durch Begasen des Schlamms mit sauerstoffhaltigem Gas in einem Reaktor. So beschreibt beispielsweise die EP-PS 0 053 777 ein Verfahren, bei dem der in einem Belüftungsbehälter befindliche Schlamm mit Sauerstoff in Form von Luft oder von mit Luft-Sauerstoff versehenem Gas begast, währenddessen umgewälzt und dabei auf thermophilem Temperaturbereich gehalten wird. Dadurch werden im Schlamm befindliche Enterobakteriazeen und Wurmeier abgetötet. Der zu behandelnde frische Schlamm wird mit dem im Belüftungsbehälter erwärmten hygienisierten Schlamm in einem zwei Kammern aufweisenden Wärmetauscher vorgewärmt, wobei der hygienisierte Schlamm abgekühlt wird. Der hygienisierte Schlamm wird schließlich einem Faulbehälter zur anaeroben Weiterbehandlung zugeführt.

Da die Faulung bei einer Schlammtemperatur von ca. 35 °C am besten abläuft, muß der hygienisierte Schlamm, der bei einer Temperatur von ca. 62 °C anfällt, vor Einleitung in den Faulbehälter um ca. 27 °C abgekühlt werden. Im Sommer weist der frische Schlamm aber eine Temperatur von ca. 20 °C auf, so daß bei theoretisch vollem Wärmeaustausch der hygienisierte Schlamm lediglich auf ca. 41 °C abgekühlt werden kann. In der Praxis liegt die Temperatur des abgekühlten hygienisierten Schlamms noch höher.

Der vorliegenden Erfindung liegt daher die Aufgabe zugrunde, ein Verfahren der eingangs genannten Art so auszugestalten, daß auf wirtschaftliche Art und Weise eine ausreichende Abkühlung des hygienisierten und/oder hydrolisierten Schlamms und eine stärkere Aufwärmung des frischen Schlamms erreicht wird.

Diese Aufgabe wird erfindungsgemäß dadurch gelöst, daß der Wärmetauscher taktweise in der Art betrieben wird, daß
a) im ersten Takt der frische Schlamm in die erste Kammer eingeleitet wird und mit dem in der zweiten Kammer befindlichen abgekühlten hygienisierten und/oder hydrolisierten Schlamm vorgewärmt wird und anschließend der abgekühlte hygienisierte und/oder hydrolisierte Schlamm abgezogen und gegebenenfalls einer Weiterbehandlung zugeführt wird,
b) im zweiten Takt warmer hygienisierter und/oder hydrolisierter Schlamm aus dem Reaktor in die zweite Kammer eingefüllt wird und der im ersten Takt vorgewärmte Schlamm mit dem warmen hygienisierten und/oder hydrolisierten Schlamm weiter vorgewärmt wird und anschließend der so vorgewärmte Schlamm in den Reaktor eingeleitet wird und
c) anschließend wieder mit dem ersten Takt begonnen wird.

Der Wärmetauscher wird also in zwei Takten mit versetzter Taktzeit mit frischem Schlamm und hygienisiertem und/oder hydrolisiertem Schlamm beschickt. Die zeitlich versetzte Befüllung der beiden Kammern des Wärmetauschers ermöglicht einen zweimaligen Temperaturausgleich zwischen frischem Schlamm und hygienisiertem und/oder hydrolisiertem Schlamm bei unterschiedlichen Temperaturniveaus. Dadurch wird ein insgesamt erhöhter Wärmeumsatz erreicht, so daß der hygienisierte und/oder hydrolisierte Schlamm stärker abgekühlt und der frische Schlamm stärker erwärmt wird.

Der hygienisierte und/oder hydrolisierte Schlamm wird vorzugsweise im ersten Takt auf ca. 35 bis ca. 38 °C abgekühlt, bevor er beispielsweise einem Faulturm zugeführt wird.

Zweckmäßigerweise werden die Schlämme in den Kammern des Wärmetauschers ständig umgewälzt, um eine hohe Wärmeübergangszahl zu erreichen und Schlammablagerungen zu vermeiden. Hierzu ist vorgesehen, die Schlämme an einem Ende der jeweiligen Kammer abzuziehen und über eine externe Leitung und eine Pumpe dem anderen Ende der Kammer wieder zuzuführen. Außerdem können die Schlämme zusätzlich oder alternativ durch in den Kammern installierte Rührwerke gerührt werden.

In einer besonders vorteilhaften Ausführungsform der Erfindung wird der frische Schlamm im ersten Takt auf ca. 30 bis ca. 35 °C vorgewärmt und der so vorgewärmte Schlamm im zweiten Takt auf ca. 42 bis ca. 47 °C weiter vorgewärmt. Dabei wird die Taktfolge durch eine Temperaturmeßeinrichtung so gesteuert, daß jeweils bei Erreichen der jeweiligen Schlammtemperatur in den Kammern des Wärmetauschers der nächste Takt eingeleitet wird. Auf diese Weise wird eine schnelle Erwärmung des frischen Schlamms bzw. Abkühlung des hygienisierten und/oder hydrolisierten Schlamms auf die erwünschten Endtemperaturen von über 40 °C bzw. ca. 35 °C erreicht.

Alternativ hierzu kann die Taktfolge auch zeitgesteuert werden. Falls eine Aufenthaltszeit des Schlamms im Reaktor von mindestens vier Stunden gefordert wird, wird die Taktzeit auf ca. acht Stunden eingestellt.

Gemäß einer Weiterbildung des Erfindungsgedankens ist vorgesehen, im Reaktor entstehendes warmes Abgas in den frischen Schlamm zu dessen Erwärmung einzuleiten. Um die Abkühlung des hygienisierten und/oder hydrolisierten Schlamms im Wärmetauscher nicht zu beeinflussen, wird das Abgas nach der Vorwärmung des frischen Schlamms im Wärmetauscher und vor Einleitung desselben in den Reaktor in den frischen Schlamm eingeleitet. Durch diese Maßnahme wird erreicht, daß die für die Hygienisierung und/oder Hydrolyse des Schlamms erforderliche Mindesttemperatur von 60 °C weit überschritten wird, so daß eine weitgehenste Abtötung von Enterobakteriazeen und Wurmeiern gewährleistet ist.

Falls die Temperatur des frischen Schlamms niedrig genug ist, um auch durch einmaligem Wärmeaustausch den hygienisierten und/oder hydrolisierten Schlamm auf ca. 35 bis ca. 38 °C abzukühlen, so ist gemäß einer bevorzugten Ausführungsform der Erfindung vorgesehen, zeitweise vom Zweitaktbetrieb auf Eintaktbetrieb umzuschalten. In diesem Fall werden frischer Schlamm und hygienisierter und/oder hydrolisierter Schlamm gleichzeitig in die jeweilige Kammer des Wärmetauschers eingefüllt und daraus abgezogen. Die Kammern werden dann nur bis zur Hälfte gefüllt. Die Umschaltung von Zweitakt- auf Eintaktbetrieb und umgekehrt erfolgt in der Weise, daß stets die erforderliche Temperatur des hygienisierten und/oder hydrolisierten Schlamms von ca. 35 bis ca. 38 °C erreicht wird.

Eine weitere Ausgestaltung des erfindungsgemäßen Verfahrens sieht vor, sowohl den aus dem Wärmetauscher abgezogenen frischen Schlamm als auch den aus dem Wärmetauscher abgezogenen hygienisierten und/oder hydrolisierten Schlamm mindestens einem weiteren Wärmetauscher zuzuführen.

Insgesamt weist das erfindungsgemäße Verfahren gegenüber dem Stand der Technik zwei entscheidende Vorteile auf:
Einerseits wird der hygienisierte Schlamm auch während der Sommerperiode auf die für die Faulung notwendige Temperatur von ca. 35 bis ca. 38 °C abgekühlt. Andererseits wird auch während der Winterzeit eine ausreichende Vorwärmung des frischen Schlamms erreicht, was sich letztlich als Betriebsenergieeinsparung auswirkt.

Das erfindungsgemäße Verfahren ist insbesondere für den Einsatz bei einer zweistufigen Klärschlammbehandlung vorgesehen, bei der in der ersten Stufe der Schlamm zunächst unter Zufuhr von Luft bzw. technisch reinem Sauerstoff teilstabilisiert und anschließend in einer Faulstufe unter Erzeugung von Methangas vollstabilisiert wird.

Aber auch bei rein aerob-thermophiler Schlammstabilisierung ist das erfindungsgemäße Verfahren anzuwenden. Dabei ermöglicht die Erfindung auch bei ungenügender Überschußschlammeindickung eine ausreichende Erwärmung des Schlamms auf die zur Hygienisierung notwendige Temperatur von über 60 °C.

Im folgenden soll die Erfindung anhand eines in den Zeichnungen schematisch dargestellten Ausführungsbeispiels näher erläutert werden.

Es zeigen:
Figur 1 ein Fließschema des Verfahrens im ersten Takt beim Füllen des Wärmetauschers mit Frischschlamm,
Figur 2 ein Fließschema des Verfahrens im ersten Takt beim Temperaturausgleich zwischen Frischschlamm und abgekühltem Schlamm,
Figur 3 ein Fließßschema des Verfahrens im ersten Takt beim Entleeren des hygieniserten Schlamms aus dem Wärmetauscher,
Figur 4 ein Fließschema des Verfahrens im zweiten Takt beim Füllen des Wärmetauschers mit hygienisiertem Schlamm,
Figur 5 ein Fließschema des Verfahrens im zweiten Takt beim Temperaturausgleich zwischen vorgewärmtem Schlamm und hygienisiertem Schlamm,
Figur 6 ein Fließschema des Verfahrens im zweiten Takt beim Entleeren des Frischschlamms aus dem Wärmetauscher.

Die Zeichungen betreffen Fließschemas zur Durchführung des erfindungsgemäßen Verfahrens, bei denen der jeweils wesentliche Verfahrensschritt mit dick gezeichneten Strömungswegen dargestellt ist. In allen Figuren sind ein Begasungsreaktor 1 mit einer Luftzufuhrleitung 2, einer Schlammumwälzleitung 3 und einer Umwälzpumpe 4 dargestellt. Im Begasungsreaktor 1 wird Klärschlamm unter Umwälzung belüftet, wobei er sich aufgrund von Bakterientätigkeit erwärmt. Der Schlamm wird im Begasungsreaktor 1 auf einer Temperatur von ca. 60 bis ca. 62 °C gehalten, so daß er hygienisiert und hydrolisiert wird. Der Begasungsreaktor 1 steht über einer Schlammableitung 6 und eine Schlammzuleitung 7 mit dem Wärmetauscher 5 in Verbindung, der als Wärmeaustauschkessel mit zwei Kammern 8 und 9 ausgebildet ist. Die Kammern 8 und 9 besitzen jeweils Schlammumwälzleitungen 10 und 11, in denen der Schlamm von Umwälzpumpen 12 und 13 umgewälzt wird.

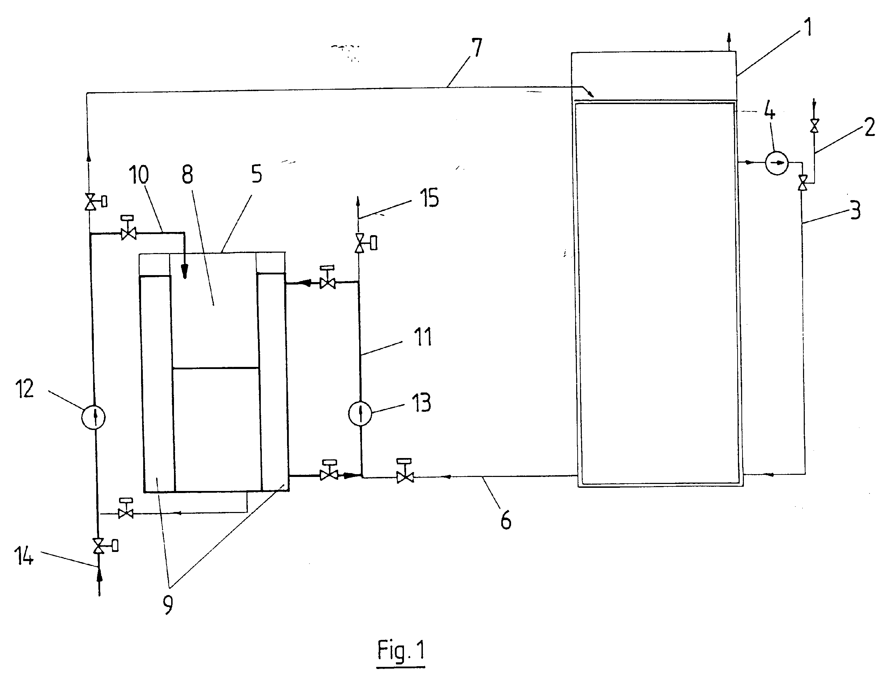

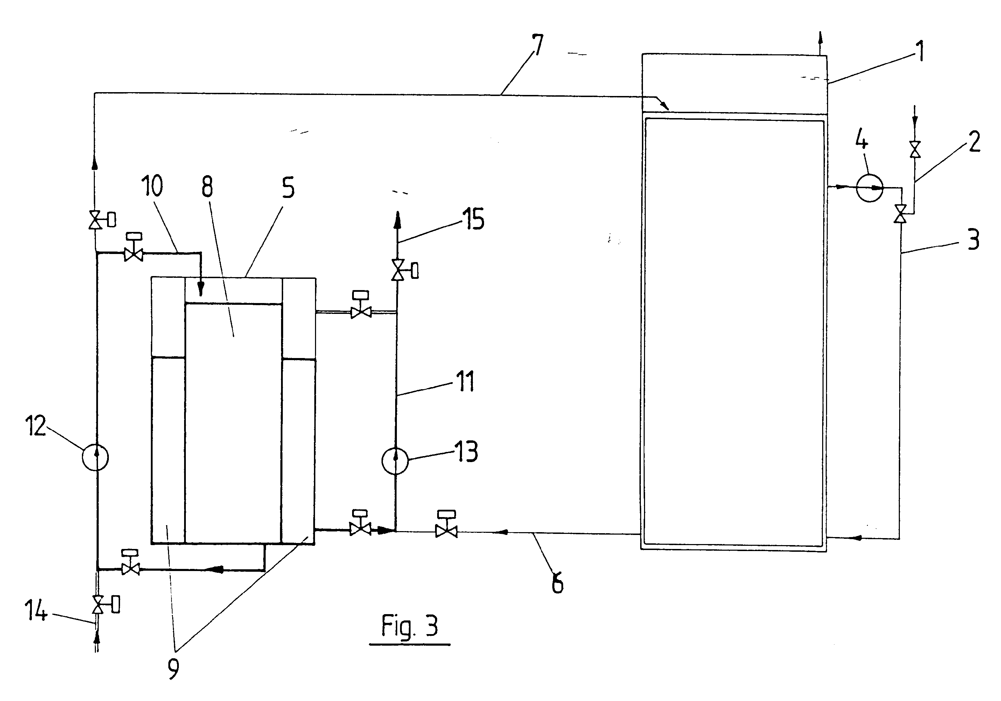

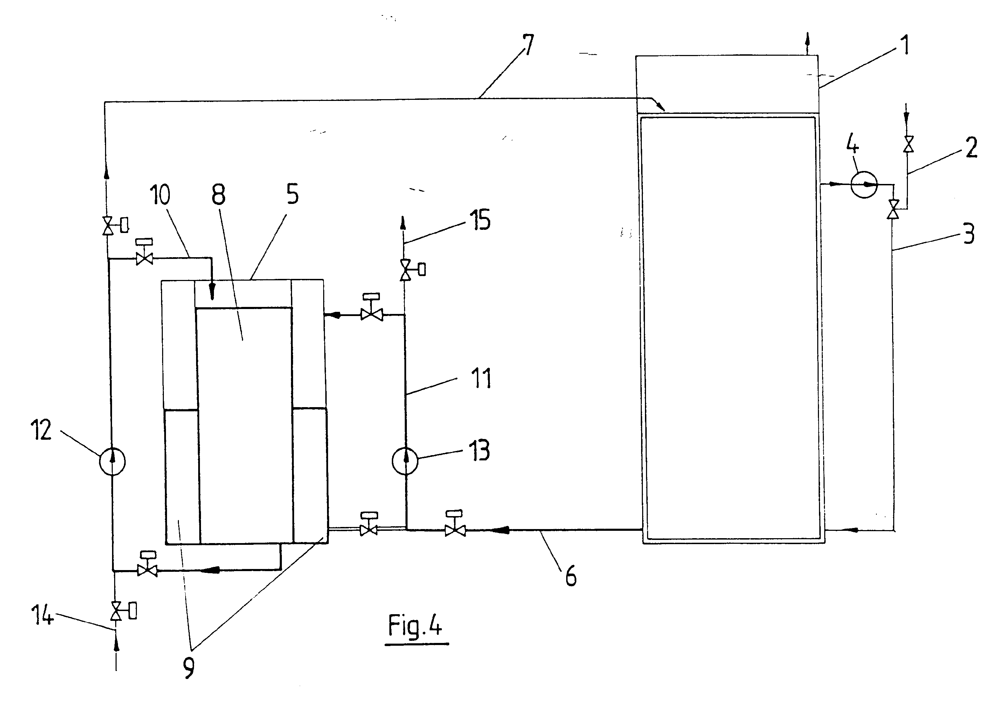

Die Figuren 1 und 3 betreffen den ersten Takt des Verfahrens, die Figuren 4 bis 6 den zweiten Takt.

Wie in Figur 1 gezeigt ist, wird bei der Durchführung des Verfahrens im ersten Takt zunächst die Kammer 8 des Wärmetauschers 5 mit Frischschlamm über Schlammzufuhrleitung 14 und Umwälzleitung 10 gefüllt. Der Frischschlamm weist eine Temperatur von ca. 20 °C auf. In der Kammer 9 befindet sich noch der im vorangegangenen Takt auf ca. 47 °C abgekühlte hygienisierte Schlamm, der ständig über die Umwälzleitung 11 und die Pumpe 13 umgewälzt wird.

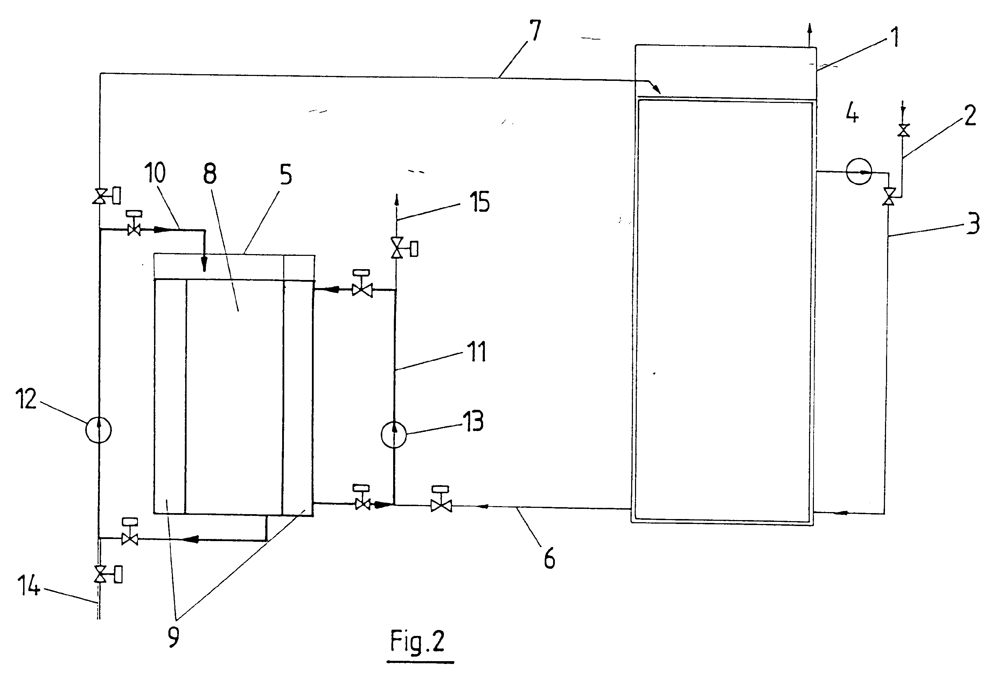

Ist die Kammer 8 vollständig mit Frischschlamm gefüllt, wird gemäß Figur 2 auch der Frischschlamm über die Umwälzleitung 10 und die Umwälzpumpe 12 umgewälzt und mit dem in der Kammer 9 befindlichen hygienisierten Schlamm in Wärmeaustausch gebracht. Dabei wird der hygienisierte Schlamm weiter auf ca. 35 °C abgekühlt, während der Frischschlamm auf ca. 32 °C erwärmt wird.

Sind diese Temperaturen erreicht, wird der hygienisierte Schlamm gemäß Figur 3 aus der Kammer 9 über Schlammableitung 15 abgezogen und zum, in den Figuren nicht dargestellten, Faulturm weitergeleitet. Der Schlamm weist jetzt eine zur Faulung optimale Temperatur von ca. 35 °C auf.

Nun folgt der zweite Takt des Verfahrens:
Wie in Figur 4 gezeigt ist, wird anschließend ca. 60 bis ca. 62 °C warmer hygienisierter Schlamm aus dem Reaktor 1 über die Leitung 6 in die Kammer 9 eingefüllt, während der im ersten Takt auf ca. 32 °C vorgewärmte Frischschlamm weiterhin über die Umwälzleitung 10 umgewälzt wird.

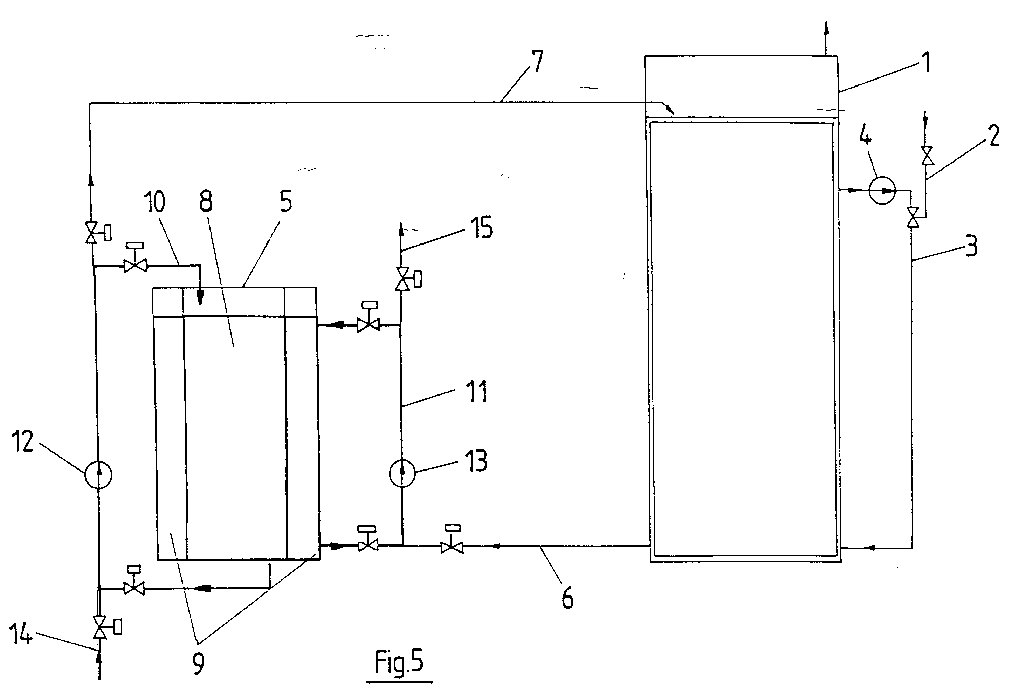

Ist die Kammer 9 vollständig mit ca. 60 bis ca. 62 °C warmem hygiensiertem Schlamm gefüllt, so wird gemäß Figur 5 mit der Umwälzung des hygienisierten Schlamms über die Umwälzleitung 11 begonnen. Es erfolgt ein Wärmeaustausch zwischen den in den Kammern 8 und 9 befindlichen Schlämmen, so daß der hygienisierte Schlamm auf ca. 47 °C abgekühlt wird und der im ersten Takt bereits auf ca. 32 °C vorgewärmte Frischschlamm auf ca. 45 °C weiter aufgewärmt wird.

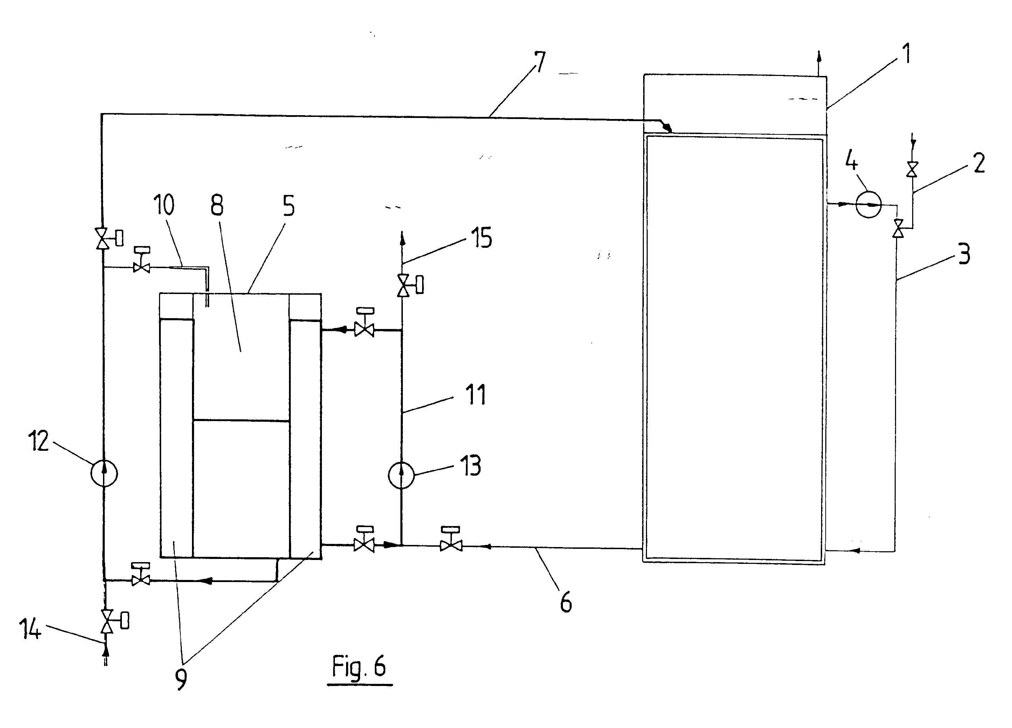

Sind diese Temperaturen erreicht, so wird gemäß Figur 6 der auf ca. 45 °C aufgewärmte Frischschlamm aus der Kammer 8 abgezogen und über Leitung 7 dem Begasungsreaktor 1 zugeführt. Im Begasungsreaktor 1 erwärmt sich der Schlamm durch die aufgrund der Belüftung einsetzenden Bakterientätigkeit auf eine Temperatur von ca. 60 bis ca. 62 °C.

Ist die Kammer 8 vollständig entleert, wird wieder gemäß Figur 1 mit Takt 1 begonnen, d.h. es wird wieder frischer Schlamm in die Kammer 8 eingefüllt.

## Patentansprüche

1. Verfahren zur Behandlung von Schlamm, bei dem frischer Schlamm in einem Reaktor durch Temperaturerhöhung hygienisiert und/oder hydrolisiert wird und mindestens in einem mindestens zwei Kammern aufweisenden Wärmetauscher der frische mit dem hygienisierten und/oder hydrolisierten Schlamm vorgewärmt bzw. der hygienisierte und/oder hydrolisierte Schlamm mit dem frischen Schlamm abgekühlt wird, dadurch gekennzeichnet, daß der Wärmetauscher (5) taktweise in der Art betrieben wird, daß
a) im ersten Takt der frische Schlamm in die erste Kammer (8) eingeleitet wird und mit dem in der zweiten Kammer (9) befindlichen abgekühlten hygienisierten und/oder hydrolisierten Schlamm vorgewärmt wird und anschließend der abgekühlte hygienisierte und/oder hydrolisierte Schlamm abgezogen und gegebenenfalls einer Weiterbehandlung zugeführt wird,
b) im zweiten Takt warmer hygienisierter und/oder hydrolisierter Schlamm aus dem Reaktor (1) in die zweite Kammer (9) eingefüllt wird und der im ersten Takt vorgewärmte Schlamm mit dem warmen hygienisierten und/oder hydrolisierten Schlamm weiter vorgewärmt wird und anschließend der so vorgewärmte Schlamm in den Reaktor (1) eingeleitet wird und
c) anschließend wieder mit dem ersten Takt begonnen wird.

2. Verfahren nach Anspruch 1, dadurch gekennzeichnet, daß die Schlämme in den Kammern (8, 9) ständig umgewälzt werden.

3. Verfahren nach Anspruch 1 oder 2, dadurch gekennzeichnet, daß der hygienisierte und/oder hydrolisierte Schlamm im ersten Takt auf ca. 35 bis ca. 38 °C abgekühlt wird.

4. Verfahren nach einem der Ansprüche 1 bis 3, dadurch gekennzeichnet, daß der frische Schlamm im ersten Takt auf ca. 30 bis ca. 35 °C vorgewärmt und der so vorgewärmte Schlamm im zweiten Takt auf ca. 42 bis ca. 47 °C weiter vorgewärmt wird.

5. Verfahren nach einem der Ansprüche 1 bis 4, dadurch gekennzeichnet, daß im Reaktor (1) entstehendes warmes Abgas nach der Vorwärmung des frischen Schlamms durch den hygienisierten und/oder hydrolisierten Schlamm und vor Einleitung des so vorgewärmten Schlamms in den Reaktor (1) in den vorgewärmten Schlamm eingeleitet wird.

6. Verfahren nach einem der Ansprüche 1 bis 5, dadurch gekennzeichnet, daß sowohl der aus dem Wärmetauscher (5) abgezogene frische Schlamm als auch der aus dem Wärmetauscher (5) abgezogene hygienisierte und/oder hydrolisierte Schlamm mindestens einem weiteren Wärmetauscher zugeführt werden.

## Claims

1. A process for the treatment of sludge, wherein fresh sludge is hygienized and/or hydrolized in a reactor by an increase in temperature, and at least in one heat exchanger, comprising at least two chambers, the fresh sludge is preheated by the hygienized and/or hydrolized sludge and the hygienized and/or hydrolized sludge is cooled by the fresh sludge, characterised in that the heat exchanger (5) is operated cylically in such manner that
a) in the first cycle, the fresh sludge is introduced into the first chamber (8) and is preheated by the cooled hygienized and/or hydrolized sludge present in the second chamber (9), whereupon the cooled, hygienized and/or hydrolized sludge is discharged and is optionally fed to a further treatment stage,
b) in the second cycle, warm, hygienized and/or hydrolized sludge from the reactor (1) is introduced into the second chamber (9), and the sludge preheated in the first cycle is further preheated by the warm, hygienized and/or hydrolized sludge, whereupon the sludge preheated in this manner is introduced into the reactor (1) and
c) whereupon the first cycle is recommenced

2. A process as claimed in Claim 1, characterised in that the sludges are continuously circulated in the chambers (8, 9).

3. A process as claimed in Claims 1 or 2, characterised in that the hygienized and/or hydrolized sludge is cooled in the first cycle to approximately 35 to approximately 38°C.

4. A process as claimed in one of Claims 1 to 3, characterised in that the fresh sludge is preheated in the first cycle to approximately 30 to approximately 35°C and the sludge preheated in this manner is further preheated in the second cycle to approximately 42 to approximately 47°C.

5. A process as claimed in one of Claims 1 to 4, characterised in that following the preheating of the fresh sludge by the hygienized and/or hydrolized sludge and prior to the introduction of the sludge, preheated in this manner, into the reactor (1), warm exhaust gas produced in the reactor (1) is introduced into the preheated sludge.

6. A process as claimed in one of Claims 1 to 5, characterised in that both the fresh sludge discharged from the heat exchanger (5) and the hygienized and/or hydrolized sludge discharged from the heat exchanger (5) is fed to at least one further heat exchanger.

## Revendications

1. Procédé de traitement de boues, dans lequel de la boue fraîche est stérilisée et/ou hydrolysée par élévation de température et dans lequel la boue fraîche est au moins préchauffée, dans un échangeur de chaleur comprenant au moins deux chambres, avec de la boue stérilisée et/ou hydrolysée, et dans lequel la boue stérilisée et/ou hydrolysée est refroidie avec la boue fraîche, caractérisé en ce que l'échangeur de chaleur (5), en fonctionnement cyclique selon l'art connu, est soumis au cycle:
(a) dans un premier cycle, la boue fraîche est introduite dans la première chambre (8) et préchauffée avec la boue stérilisée et/ou hydrolysée refroidie alors que celle-ci se trouvait présente dans la seconde chambre (9), et ensuite la boue stérilisée et/ou hydrolysée refroidie est soutirée et envoyée, le cas échéant, vers un traitement ultérieur;
(b) dans un second cycle, la boue stérilisée et/ou hydrolysée chaude est envoyée du réacteur (1) vers la seconde chambre (9) et la boue préchauffée au cours du premier cycle est à nouveau préchauffée avec la boue stérilisée et/ou hydrolysée chaude, et ensuite la boue ainsi préchauffée est envoyée dans le réacteur (1); et
(c) ensuite le premier cycle recommence à nouveau.

2. Procédé selon la revendication 1, caractérisé en ce que les boues sont agitées constamment dans les chambres (8 et 9).

3. Procédé selon la revendication 1 ou 2, caractérisé en ce que la boue stérilisée et/ou hydrolysée est refroidie, dans le premier cycle, d'une différence de température d'environ 35 à environ 38°C.

4. Procédé selon l'une quelconque des revendications 1 à 3, caractérisé en ce que la boue fraîche est préchauffée dans le premier cycle d'une différence de température d'environ 30 à environ 35°C, et en ce que la boue ainsi préchauffée est à nouveau préchauffée dans le second cycle d'une différence de température d'environ 42 à environ 47°C.

5. Procédé selon l'une quelconque des revendications 1 à 4, caractérisé en ce que les gaz chauds émis dans le réacteur (1) sont envoyés dans la boue préchauffée après préchauffement de la boue fraîche par la boue stérilisée et/ou hydrolysée et avant l'introduction de la boue ainsi préchauffée dans le réacteur (1).

6. Procédé selon l'une quelconque des revendications 1 à 5, caractérisé en ce que la boue fraîche soutirée de l'échangeur de chaleur (5) tout comme la boue stérilisée et/ou hydrolysée soutirée de l'échangeur de chaleur (5) sont envoyées dans un échangeur de chaleur supplémentaire.
